# EUROPEAN PATENT APPLICATION

(11) **EP 3 824 768 A1**
(43) Date of publication of application: **26.05.2021**
(21) Application number: 20195033.4
(22) Date of filing: 08.09.2020
(51) Int. Cl.: A47F 9/04, G06Q 20/20, G07G 1/00

(54) **WIRELESS TAG READING DEVICE AND WIRELESS TAG INFORMATION PROCESSING SYSTEM**

(30) Priority: 21.11.2019 JP 2019210460
(71) Applicant: Toshiba TEC Kabushiki Kaisha, Tokyo 141-8562 (JP)
(72) Inventor: Suzuki, Yuki, Tokyo, 141-8562 (JP)
(74) Representative: Hoffmann Eitle

(57) **Abstract**

In an embodiment, a wireless tag reading checkout apparatus checkout apparatus includes a conveyor to convey objects with wireless tags attached thereto. An antenna is arranged along a portion of the conveyor and is configured to transmit an interrogation wave for reading wireless tags and then to receive a response wave from the wireless tags. A controller calculates changes in a phase difference between the interrogation wave and a response wave from a wireless tag over a time period corresponding to the conveyance of an object by the conveyor. The controller can identify whether the wireless tag responding to the interrogation wave is on an object being conveyed by the conveyor by using the calculated changes in the phase difference.

## Description

### CROSS-REFERENCE TO RELATED APPLICATION

This application is based upon and claims the benefit of priority from Japanese Patent Application No. 2019-210460, filed November 21, 2019, the entire contents of which are incorporated herein by reference.

### FIELD

Embodiments described herein relate generally to a wireless tag reading device and a wireless tag information processing system.

### BACKGROUND

In recent years, an RFID (Radio Frequency Identification) technique has been used in a distribution system, a logistics system, and the like, to read information concerning articles or commodities from RFID tags (also referred to as wireless tags) and process the information.

For example, in a volume retailer such as a supermarket, a checkout system including a checkout machine and a conveying mechanism such as a conveyor belt is used. The conveying mechanism includes a wireless tag reading device that reads tag information from a wireless tag attached to a commodity on the conveying mechanism. The checkout machine performs a payment process based on the tag information read by the wireless tag reading device. With such a checkout system, a store clerk does not need to input commodity information manually, and thus can easily and quickly complete the payment process.

As such a wireless tag reading device with an antenna device integrated with a conveying mechanism is known. The integrated antenna device- conveying mechanism includes a base, a slider mechanism that includes a plurality of rollers and conveys a commodity. An antenna is disposed between the base and the slider mechanism. The antenna receives a radio signal from the wireless tags attached to the commodities conveyed along the slider. The structure of the antenna device is simplified and does not have a tunnel-like cover that partially covers the slider.

However, a wireless tag reading device of this type, which reads tag information in a non-enclosed space, may sometimes receive a radio signal from a nearby wireless tag not being conveyed by the conveying mechanism, e.g., a wireless tag attached to a commodity placed or passing near the conveying mechanism, perhaps on a neighboring conveying mechanism or the like. As a result, if such a reading device is applied to a checkout system, a commodity that a customer does not intend to purchase may be considered as a commodity to be purchased and an erroneous registration may occur. Accordingly, there is a need for a technique that can distinguish a target wireless tag being conveyed by a conveying mechanism and a non-target wireless tag such as a wireless tag attached to a commodity conveyed by neighboring conveying mechanism.

### SUMMARY OF THE INVENTION

One of the objects of the present invention is to improve prior art techniques and overcome at least some of the prior art problems as for instance above illustrated.

According to a first aspect of the present invention, it is provided a wireless tag reading checkout apparatus, comprising: a conveyor configured to convey objects with wireless tags attached thereto; an antenna arranged along a portion of the conveyor is configured to transmit an interrogation wave for reading wireless tags and receive a response wave from the wireless tags; and a controller configured to: calculate changes in a phase difference between the interrogation wave and a response wave from a wireless tag over a time corresponding to the conveyance of an object by the conveyor, and identify whether the wireless tag responding to the interrogation wave is on the object conveyed by the conveyor using the calculated changes in the phase difference.

Optionally, in the wireless tag reading checkout apparatus according to the first aspect of the invention, the antenna is under the conveyor, and a radio wave reflector is under the antenna so as to partially cover a lower surface of the antenna.

Optionally, in the wireless tag reading checkout apparatus according to the first aspect of the invention, the antenna is located immediately under a center of a particular section of the conveyor, and the radio wave reflector is arranged closer to a downstream end of the particular section than the antenna.

Optionally, the wireless tag reading checkout apparatus according to the first aspect of the invention further comprises a memory that stores reference data that indicates changes in phase difference between interrogation wave and a response wave from a wireless tag during a conveyance of the wireless tag by the conveyor, wherein whether or not the wireless tag responding to the interrogation wave is identified as being on the object is based on a comparison of the calculated changes in phase difference to the reference data.

Optionally, in the wireless tag reading checkout apparatus according to the first aspect of the invention, the controller is further configured to compare the reference data to the calculated changes in phase difference, and determine that a wireless tag, which has transmitted the response wave, has been conveyed by the conveyor when deviation of the calculated changes in phase difference from the reference data falls within a first predetermined range.

Optionally, in the wireless tag reading checkout apparatus according to the first aspect of the invention, the controller is further configured to generate a request for a user confirmation of inclusion of the object in a sales transaction when the deviation does not fall within the first predetermined range but falls within a second predetermined range wider than the first predetermined range.

Optionally, the wireless tag reading checkout apparatus according to the first aspect of the invention further comprises a display, wherein the controller is further configured to generate a screen for displaying the request on the display.

Optionally, in the wireless tag reading checkout apparatus according to the first aspect of the invention, the controller is further configured to determine that a wireless tag is on an object that has not been conveyed by the conveyor when the deviation does not fall within the second predetermined range.

Optionally, in the wireless tag reading checkout apparatus according to the first aspect of the invention, the controller is further configured to perform checkout processing based on information stored in wireless tags determined as having been conveyed by the conveyor.

Optionally, the wireless tag reading checkout apparatus according to the first aspect of the invention further comprises first and second sensors each configured to detect an object being conveyed by the conveyor, wherein the controller is further configured to start the transmission of the interrogation wave when the object is detected by the first sensor and to stop the transmission of the interrogation wave when the object is detected by the second sensor.

According to a second aspect of the invention, it is provided a wireless tag reading method, comprising conveying an object along a conveyor, the object having a wireless tag attached thereto; transmitting an interrogation wave from an antenna during the conveyance of the object; calculating changes in a phase difference between the interrogation wave and a response wave received by the antenna from a wireless tag; and identifying whether the wireless tag responding to the interrogation wave is on the object conveyed by the conveyor using the calculated changes in the phase difference.

Optionally, in the method according to the second aspect of the invention, the antenna is under the conveyor, and a radio wave reflector is under the antenna so as to partially cover a lower surface of the antenna.

Optionally, in the method according to the second aspect of the invention, the antenna is located immediately under a center of a particular section of the conveyor, and the radio wave reflector is arranged closer to a downstream end of the particular section than the antenna.

Optionally, the method according to the second aspect of the invention further comprises storing reference data that indicates changes in phase difference between the interrogation wave = and a response wave from a wireless tag during a conveyance of the wireless tag by the conveyor, wherein whether or not the wireless tag responding to the interrogation wave is identified as being on the object is based on a comparison of the calculated changes in phase difference to the reference data.

Optionally, the method according to the second aspect of the invention further comprises comparing the reference data to the calculated changes in phase difference; and determining that a wireless tag, which has transmitted the response wave, has been conveyed by the conveyor when deviation of the calculated changes in phase difference from the reference data falls within a first predetermined range.

Optionally, the method according to the second aspect of the invention further comprises generating a request for a user confirmation of inclusion of the object in a sales transaction when the deviation does not fall within the first predetermined range but falls within a second predetermined range wider than the first predetermined range.

Optionally, the method according to the second aspect of the invention further comprises displaying the request on a display.

Optionally, the method according to the second aspect of the invention further comprises determining that a wireless tag is on an object that has not been conveyed by the conveyor when the deviation does not fall within the second predetermined range.

Optionally, the method according to the second aspect of the invention further comprises performing checkout processing based on information stored in the identified wireless tag.

According to a third aspect of the invention, it is provided a checkout system, comprising: a conveyor configured to convey a commodity with a wireless tag attached thereto; an antenna arranged along the conveyor; a controller configured to control the antenna to transmit interrogation waves during the conveyance of the commodity; and a checkout device configured to: calculate changes in phase difference between the interrogation waves transmitted by the antenna and response waves received by the antenna in response to the interrogation waves, identify whether or not a wireless tag that has transmitted a response wave is on a commodity that has been conveyed by the conveyor based on the calculated changes in the phase difference, and perform checkout processing based on information stored in the wireless tag of the object that has been identified as having been conveyed by the conveyor.

### DESCRIPTION OF THE DRAWINGS

FIG. 1 is a diagram illustrating a wireless tag information processing system.
FIG. 2 is a top view of the wireless tag information processing system.
FIG. 3 is a sectional side view of the wireless tag information processing system.
FIG. 4 is a hardware block diagram a wires tag reading device.
FIG. 5 is a functional block diagram of the wireless tag reading device.
FIG. 6 is a hardware block diagram of a wireless tag information processing device.
FIG. 7 is a functional block diagram of the wireless tag information processing device.
FIG. 8 is a diagram for explaining a method for detecting a moving distance of a wireless tag.
FIG. 9 is a graph illustrating a phase difference between an interrogation wave transmitted by the wireless tag reading device and a response wave from a wireless tag.
FIG. 10 is a flowchart illustrating processing performed by the wireless tag reading device.
FIG. 11 is a flowchart illustrating processing performed by the wireless tag information processing device.

### DETAILED DESCRIPTION

Embodiments provide a wireless tag reading device and a wireless tag information processing system capable of distinguishing a target wireless tag from a non-target wireless tag.

According to one embodiment, a wireless tag reading checkout apparatus includes a conveyor configured to convey objects with wireless tags attached thereto and an antenna arranged along a portion of the conveyor. The antenna is configured to transmit an interrogation wave for reading wireless tags and to receive a response wave from the wireless tags. A controller is configured to calculate changes in a phase difference between the interrogation wave and a response wave from a wireless tag over a time corresponding to the conveyance of an object by the conveyor, and then identify whether the wireless tag responding to the interrogation wave is on the object conveyed by the conveyor using the calculated changes in the phase difference.

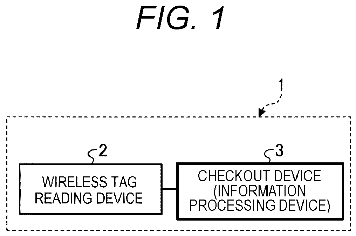

An checkout system in one or more embodiments is explained below with reference to the drawings. FIG. 1 is a diagram illustrating a checkout system 1. The checkout system 1 is used by a volume retailer or the like and includes a wireless tag reading device 2 and a checkout device 3.

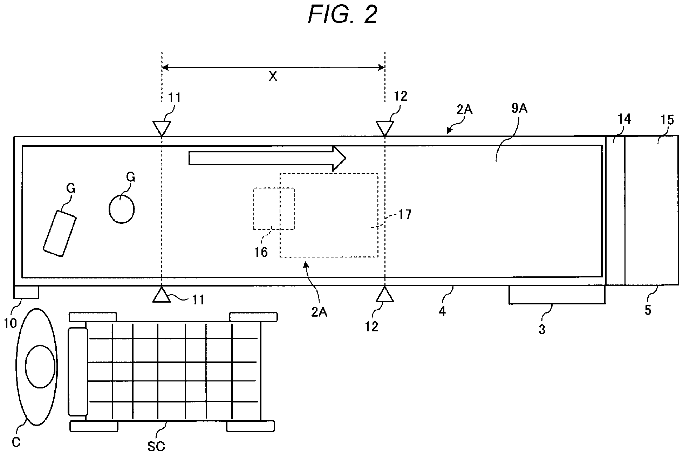

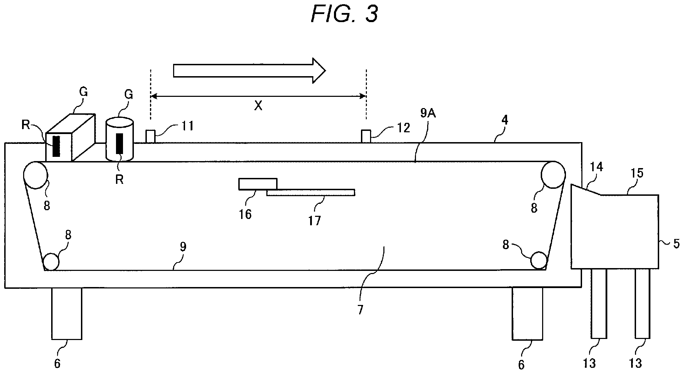

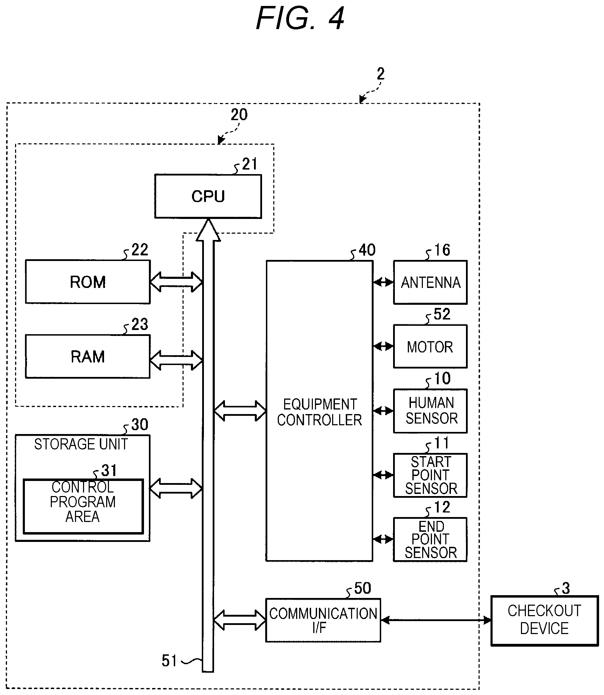

As illustrated in FIG. 2, the wireless tag reading device 2 includes a conveying unit 2A and a reading unit 2B. The conveying unit 2A conveys a commodity that a customer is about to purchase. As illustrated in FIGS. 2 and 3, the conveying unit 2A includes a base 4 and a receiving table 5. The base 4 is supported by a plurality of supporting legs 6 and includes a conveying mechanism 7 therein. The conveying mechanism 7 includes upper and lower rollers 8, a conveying belt 9 laid over the rollers 8, a motor 52 (see FIG. 4) that drives any one of the rollers 8, and a control unit 20 (see FIG. 4) that controls the motor 52. The roller 8 is driven by the motor 52, whereby the conveying belt 9 rotates and conveys a commodity G placed on the conveying belt 9 in an arrow direction shown in FIGS. 2 and 3. A part of the conveying belt 9 exposed on the upper surface of the base 4 is referred to a conveying path 9A. A wireless tag R is attached to the commodity G.

The conveying unit 2A includes a human sensor 10, start point sensors 11, and end point sensors 12. The sensors 10 to 12 are attached to the base 4. The human sensor 10 is attached to the wireless tag reading device 2 where the customer is located when starting checkout processing, i.e., at the left end in FIG. 2, and detects the customer. If the human sensor 10 detects the customer, the motor 52 is driven and the conveying belt 9 rotates.

The start point sensors 11 are disposed at a start point of a section X, which is a particular section or region of the conveying path 9A. The start point sensors 11 detect a commodity being conveyed by the conveying belt 9 past the start point of the section X. The end point sensors 12 are disposed at an end point of the section X and detect the commodity conveyed by the conveying belt 9 past the end point of the section X. It is explained more particularly below how detection results by the start point sensors 11 and the end point sensors 12 are used. In an embodiment, optical sensors are used as the human sensor 10, the start point sensors 11, and the end point sensors 12. However, various sensor types such as image sensors or cameras may be used.

The receiving table 5 is supported by supporting legs 13 in the position at the end of the conveying mechanism 7. The receiving table 5 includes a slope section 14 and a placing section 15 on the upper surface thereof. The commodity moves along the conveying belt 9 and eventually drops from the conveying belt 9 to the slope section 14 and reaches the placing section 15.

The reading unit 2B includes an antenna 16 and a metal plate 17, which reflects a radio wave. The antenna 16 is provided below the conveying path 9A and is positioned in approximately the midpoint of the section X along the conveying direction (large arrow direction in FIG. 2) of the conveying mechanism 7. The metal plate 17 is located on the lower side of the antenna 16. A part of the metal plate 17 partially overlaps with the antenna 16. The metal plate 17 is offset to the downstream side of the antenna 16 in the conveying direction. The wireless tag reading device 2 emits a radio wave having a frequency in a UHF (Ultra High Frequency) band.

The checkout device 3 is provided near an end portion of the conveying mechanism 7. The checkout device 3 is a self-service checkout device with which the customer performs a payment process by himself or herself. In FIG. 2, the customer is indicated by the reference symbol "C", and a shopping cart used by the customer is indicated by the reference symbol "SC".

A hardware configuration of the wireless tag reading device 2 is explained with reference to FIG. 4. The wireless tag reading device 2 includes the control unit 20, a storage unit 30, an equipment controller 40, a communication I/F (Interface) 50, and the like. The control unit 20, the storage unit 30, the equipment controller 40, and the communication I/F 50 are connected to one another via a bus 51.

The control unit 20 includes a CPU (Central Processing Unit) 21, a ROM (Read Only Memory) 22, and a RAM (Random Access Memory) 23. The CPU 21, the ROM 22, and the RAM 23 are connected to one another via the bus 51. The CPU 21 is a processor for executing functions of the wireless tag reading device 2. The ROM 22 stores various programs. Various programs and various data stored in the ROM 22 and the storage unit 30 are loaded in the RAM 23. The CPU 21 executes a control program (s) stored in the ROM 22 or the storage unit 30 and loaded in the RAM 23, whereby the control unit 20 executes various kinds of control processing for the wireless tag reading device 2.

The storage unit 30 includes a control program area 31 that stores various control programs. The equipment controller 40 is connected to the antenna 16, the motor 52, the human sensor 10, the start point sensors 11, and the end point sensors 12. The communication I/F 50 is connected to the checkout device 3. Consequently, the wireless tag reading device 2 is capable of transmitting and receiving information to and from the checkout device 3.

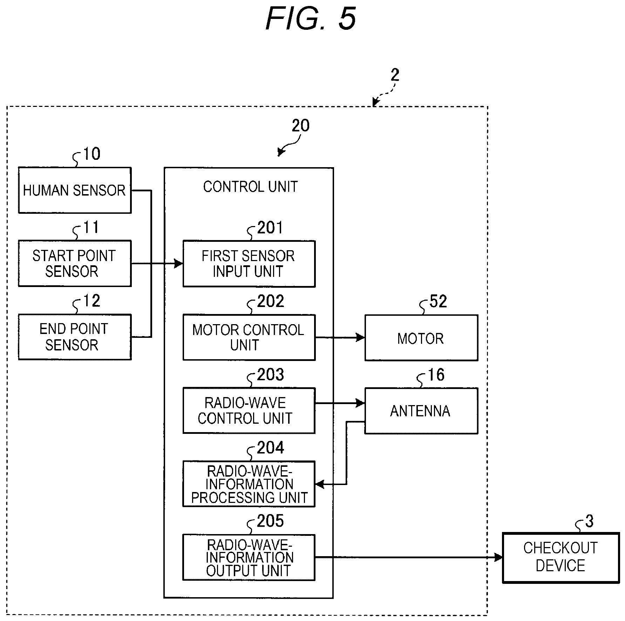

A functions performed by the control unit 20 of the wireless tag reading device 2 is explained with reference to FIG. 5. The CPU 21 executes a control program(s) stored in the ROM 22 or the control program area 31 of the storage unit 30, whereby the control unit 20 functions as a first sensor input unit 201, a motor control unit 202, a radio-wave control unit 203, a radio-wave-information processing unit 204, and a radio-wave-information output unit 205.

Information detected by the human sensor 10, the start point sensors 11, and the end point sensors 12 is input to the first sensor input unit 201. The motor control unit 202 controls the motor 52 based on information input from the first sensor input unit 201. Specifically, if information indicating that the human sensor 10 detects the customer is input to the motor control unit 202 from the first sensor input unit 201, the motor control unit 202 starts driving of the motor 52. If information indicating that a fixed time has elapsed from when the end point sensors 12 detected a commodity is input to the motor control unit 202 from the first sensor input unit 201, the motor control unit 202 stops the driving of the motor 52.

The radio-wave control unit 203 outputs a control signal to the antenna 16 based on information input from the first sensor input unit 201. Specifically, if the first sensor input unit 201 receives, from the conveying unit 2A, a start notification, that is, information indicating that the start point sensors 11 detect a commodity, the radio-wave control unit 203 outputs a control signal to the antenna 16 to cause the antenna 16 to transmit an interrogation wave (also referred to as transmission wave or a carrier wave) at a predetermined interval or continuously. If the information indicating that the fixed time has elapsed from when the end point sensors 12 detected a commodity is input to the radio-wave control unit 203 from the first sensor input unit 201, the radio-wave control unit 203 outputs a control signal to the antenna 16 to cause the antenna 16 to stop the output of the interrogation wave.

The radio-wave information processing unit 204 generates and stores radio wave information of a transmission wave transmitted by the antenna 16 and a response wave received by the antenna 16 from a wireless tag. The radio wave information, in this context, is information with which a phase difference between the transmission wave and the response wave (that is, a phase difference of the response wave with respect to the transmission wave) can be calculated. In an embodiment, the radio wave information is information with which the waveforms of the transmission wave and the response wave can be specified. The radio wave information also includes wireless tag information (e.g., a tag ID and/or product code) included in the response wave. The radio-wave-information output unit 205 outputs information stored by the radio-wave-information processing unit 204 to the checkout device 3.

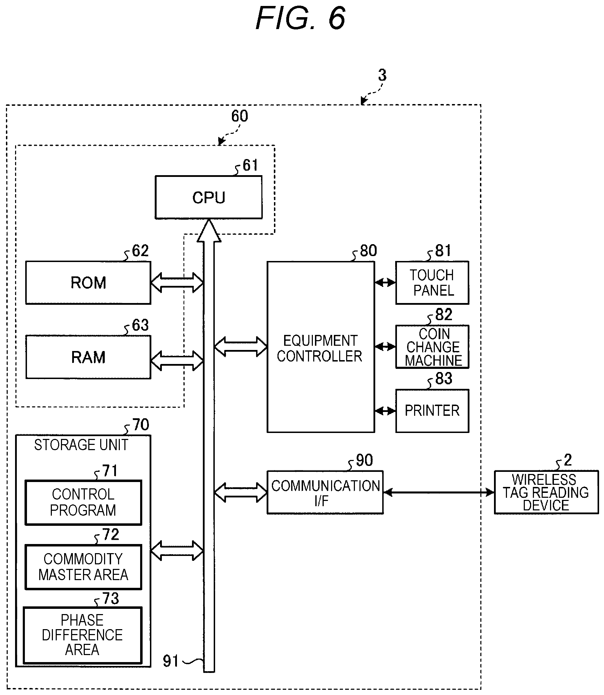

A hardware configuration of the checkout device 3 is explained with reference to FIG. 6. The checkout device 3 is a POS (Point Of Sales) terminal and includes a control unit 60, a storage unit 70, an equipment controller 80, a communication I/F (Interface) 90, and the like. The control unit 60, the storage unit 70, the equipment controller 80, and the communication I/F 90 are connected to one another via a bus 91.

The control unit 60 includes a CPU 61, a ROM 62, and a RAM 63. The CPU 61, the ROM 62, and the RAM 63 are connected to one another via the bus 91. The CPU 61 is a processor for executing functions of the checkout device 3 according to program instructions. The ROM 62 stores various programs. Various programs and various data stored in the ROM 62 and the storage unit 70 are loaded in the RAM 63. The CPU 61 executes a control program(s) stored in the ROM 62 or the storage unit 70 and loaded in the RAM 63, whereby the control unit 60 executes various kinds of control processing for the checkout device 3.

The storage unit 70 includes a control program area 71, a commodity master area 72, and a phase-difference storing area 73. The control program area 71 stores various control programs and the like concerning a payment process. The commodity master area 72 stores a commodity master. In this context, commodity master is a master file in which product names, prices, and the like for commodities are stored in association with commodity codes. In general, since the commodity master includes a list of all items available for purchase at the store location, it is updated at least every day.

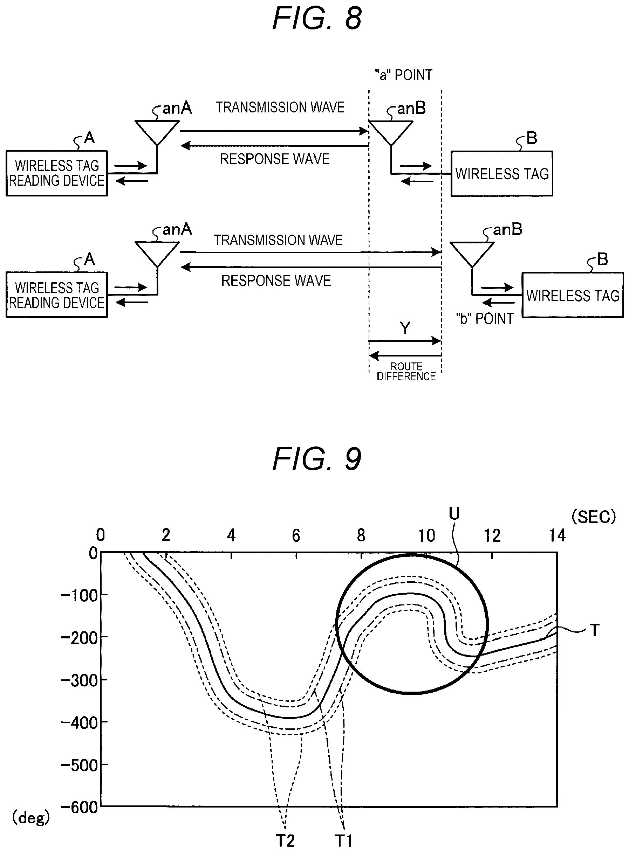

The phase-difference storing area 73 stores phase difference data. Specifically, the phase-difference storing area 73 stores time-series data concerning a reference value of a phase difference, a first range and a second range concerning the time-series data, and the like. The reference value is a value determined in advance based on experiment (s) performed using the wireless tag reading device 2. The reference value is a value obtained by measuring a phase difference between a transmission wave from the antenna 16 and a response wave from the wireless tag whiled the wireless tag is moved in the section X by the conveying mechanism 7, (see a curve T in FIG. 9) . The first range is a range of ± 20% from the reference value and is the range in which it is considered it can be safely determined, considering various possible errors and tolerances, that the responding wireless tag is being conveyed by the conveying unit 2A. The second range is a range of ± 30% from the reference value and is the range in which it is possible, but not certain the responding wireless tag is conveyed by the conveying unit 2A. If the time-series data of the phase difference is in the first range concerning the same wireless tag, the time-series data satisfies a first condition. If the time-series data is not included in the first range, but is included in the second range, the time-series data satisfies a second condition.

The control program(s) may be provided via a non-transitory computer-readable recording medium such as a CD-ROM or the like. The control program(s) executed by the wireless tag reading device 2 and the checkout device 3 may be stored on a computer connected to a network such as the Internet and downloaded through the network. Further, the control program(s) may be stored in the computer and executed through a network such as the Internet.

The equipment controller 80 is connected to a touch panel 81, a coin change machine 82, and a printer 83. The touch panel 81 displays various kinds of information necessary when the customer makes payment, such as a total amount, commodity names, and unit prices, and receives operation by the customer. The coin change machine 82 stores bills and coins paid by the customer and dispenses bills and coins to the customer as a change. The printer 83 prints a receipt if the payment by the customer is completed. The communication I/F 90 is connected to the wireless tag reading device 2. Consequently, the checkout device 3 is capable of transmitting and receiving information to and from the wireless tag reading device 2.

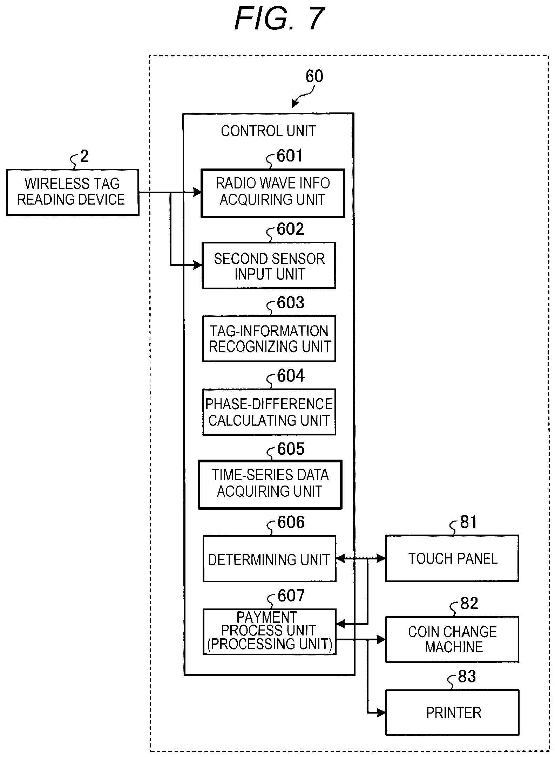

Subsequently, functions performed by the control unit 60 of the checkout device 3 is explained with reference to FIG. 7. The CPU 61 executes a control program(s) stored in the ROM 62 or the control program area 71 of the storage unit 70, whereby the control unit 60 functions as a radio-wave-information acquiring unit 601, a second sensor input unit 602, a tag-information recognizing unit 603, a phase-difference calculating unit 604, a time-series data acquiring unit 605, a determining unit 606, and a payment process unit 607.

The radio-wave-information acquiring unit 601 acquires radio wave information output from the radio-wave-information output unit 205 of the wireless tag reading device 2. A stop notification is input to the second sensor input unit 602 from the wireless tag reading device 2 based on detection by the end point sensors 12. Specifically, if the end point sensors 12 has not detected a commodity for a particular time after previously detecting the commodity, the wireless tag reading device 2 determines that the wireless tag reading device 2 had read all commodities to be purchased by a customer, and inputs the stop notification to the second sensor input unit 602.

The tag-information recognizing unit 603 recognizes, in the radio wave information acquired by the radio-wave-information acquiring unit 601, from a response wave, wireless tag information, that is, information relating to a commodity to which the wireless tag is attached, such as a commodity code or an individual article code. The phase-difference calculating unit 604 calculates, from the radio wave information acquired by the radio-wave-information acquiring unit 601, a phase difference between a transmission wave transmitted by the antenna 16 and a response wave received by the antenna 16 from the wireless tag. The phase-difference calculating unit 604 calculates, based on the radio wave information continuously acquired by the radio-wave-information acquiring unit 601, phase differences between transmission waves and response waves responding to the transmission waves, and generates and outputs time-series data indicating the phase differences in time series.

The time-series data acquiring unit 605 acquires the time-series data that is output by the phase-difference calculating unit 604. The determining unit 606 compares the time series data of the phase differences acquired by the time-series data acquiring unit 605 and the phase difference data stored in the phase-difference storing area 73, and determines whether the time-series data satisfies the first condition, that is, the time-series data is included in the first range. Similarly, the determining unit 606 compares the time-series data of the phase differences acquired by the time-series data acquiring unit 605 and the phase difference data stored in the phase-difference storing area 73, and determines whether the time series data satisfies the second condition, that is, the time-series data is not included in the first range but is included in the second range. If a phase difference concerning one wireless tag acquired by the time-series data acquiring unit 605 satisfies the first condition, the determining unit 606 determines that the wireless tag is conveyed by the conveying unit 2A.

The payment process unit 607 performs a payment process for a commodity having the wireless tag that has been determined by the determining unit 606 as satisfying the first condition. The payment process unit 607 performs the payment process for the commodity having the wireless tag that has been determined by the determining unit 606 as satisfying the second condition when the customer has confirmed to purchase the commodity. The payment process includes display of a total amount relating to a transaction and printing of a receipt, which are usually performed by a POS terminal for checkout.

FIG. 8 is a diagram illustrating a positional relation between a wireless tag reading device A and a wireless tag B. FIG. 8 schematically illustrates a wireless tag B at a position "a, " which is a point near the wireless tag reading device A, and the wireless tag B at a position "b," which a point far (at least relative to position "a") from the wireless tag reading device A. In FIG. 8, the reference symbol "anA" indicates an antenna of the wireless tag reading device A and the reference symbol "anB" indicates an antenna of the wireless tag B.

Irrespective of whether the wireless tag B is present at the "a" point or present at the "b" point, if the wireless tag B receives a transmission wave from the wireless tag reading device A, the wireless tag B transmits a response wave. The wireless tag reading device A can receive the response wave and reads tag information included in the response wave. At this time, the distance between the "a" point and the "b" point and the wireless tag B is different by the moving distance Y ("route distance") of the wireless tag B. Accordingly, a phase difference between the transmission wave from the wireless tag reading device A and the response wave received by the wireless tag reading device A from the wireless tag B is different between when the wireless tag B is located at the "a" point and when the wireless tag B is located at the "b" point. Since the "a" point is at a shorter distance from the wireless tag reading device A, a phase difference (a1) at the "a" point is less than a phase difference (b1) at the "b" point. This example embodiment focuses on calculating the moving distance of the wireless tag B based on the phase differences.

Here, the calculation of the moving distance of the wireless tag B in the case of a radio wave at 920 MHz in the UHF band is explained. In such a case, one wavelength is approximately 326 mm, and one wavelength corresponds to 360° in terms of a phase angle, and thus a distance per phase angle 1° increment is approximately 0.91 mm (=326/360) . In FIG. 8, the difference between the phase difference a1 for wireless tag B located at the "a" point and the phase difference b1 for the wireless tag B located at the "b" point, is caused by a difference in total travel length of transmission and response signals (that is, twice the moving distance Y). Therefore, the moving distance Y from the "a" point to the "b" point can be calculated as (b1 - a1) × 0.91/2. In this way, the moving distance of the wireless tag can be calculated.

Subsequently, a method of determining whether a commodity is being conveyed by the conveying unit 2A is explained. FIG. 9 is a graph illustrating phase differences in time series concerning a wireless tag attached to a commodity moving through the section X in FIG. 2. In FIG. 9, the horizontal axis indicates a time (in seconds) from when the start point sensors 11 first detect the commodity. The horizontal axis is set to cover a range of a time in which the commodity is normally conveyed by the conveying unit 2A from the start point to the end point of the section X. The vertical axis indicates the phase difference as explained above (that is, the phase difference between the transmission wave transmitted by the antenna 16 and the response wave received by the antenna 16). The phase differences illustrated in the graph are values normalized based on the phase difference at the start point of the section X being set to 0. A phase difference value calculated at a predetermined interval is accumulated with respect to a reference value 0° and is a value subjected to so-called unwrap processing.

The curve T is a curve indicating time-series data of the reference values (reference data). As explained above, here the reference values are obtained by an experiment that measures a phase difference with respect to the time from the start point of the section X while the wireless tag is being moved by the conveying unit 2A. Since the antenna 16 is not located on the conveying belt 9, a moving distance of the commodity and a moving distance calculated based on the response wave direction by the wireless tag reading device 2 do not precisely coincide.

The curve T is not symmetrical because the values of curve T are affected by the presence of the metal plate 17 offset towards one side of the section X. If the metal plate 17 were not provided, the curve T would theoretically be symmetrical since the antenna 16 is provided in the center of the section X and the wireless tag moves at a constant speed.

However, since the transmission wave transmitted from the antenna 16 is being reflected by the metal plate 17, a reflected wave of the transmission wave interferes with the response wave transmitted from the wireless tag or the response wave is transmitted from the wireless tag according to a reflected wave. Accordingly, since a disturbance occurs in the phase difference, the curve T is not symmetrical. The disturbance in the phase difference due to the metal plate 17 markedly appears when the wireless tag is near the metal plate 17. The curve T thus has a peculiar shape as indicated by reference symbol "U" in FIG. 9.

The metal plate 17 is positioned to correspond to one part of the conveying path 9A to identifiably vary the time-series data of the reference value for the phase difference according to a position of the wireless tag along the conveying unit 2A. In other words, a radio wave reflector (metal plate 17) strongly affecting the phase difference is provided in a part of the conveying path 9A, but not all of the conveying path 9A. As a result, the time-series data curve T of the reference value of the phase difference is asymmetrical. Consequently, the wireless tag reading device 2 can surely distinguish the wireless tag attached to the commodity being conveyed by the conveying unit 2A from other wireless tags that are attached to commodities not being conveyed by the conveying unit 2A.

Along these lines, it is desirable to provide a slit vertically penetrating through the metal plate 17. By providing this slit, a sudden, obvious change can be provided in a portion of the time-series data curve T. The time-series data curve T is thus formed as an even more distinctively characteristic curve. Therefore, since the slit is provided, the wireless tag reading device 2 can more surely distinguish the wireless tags attached to a commodity conveyed by the conveying unit 2A from the other wireless tags (since time-series data for such other wireless tags will not have the distinct characteristics found in time-series data curve T) . If the slit is provided, the length, the shape, and the like of the slit may be optimized according to an ambient signal environment.

The curve T1 is a curve indicating ± 20%, which is a threshold, with respect to the reference value. If a difference between a certain reference value and a value of ± 20% with respect to the reference value is set to a fixed difference, the curve T1 is a curve formed by connecting values obtained by adding or subtracting the fixed difference to or from reference values. Therefore, the curve T1 is parallel to the curve T and is not a curve formed by connecting values of ± 20% with respect to the reference values. A range surrounded by the curve T1 is the first range. A curve T2 is a curve indicating ±30%, which is a threshold, with respect to the reference value. Like the curve T1, the curve T2 is parallel to the curve T. A range surrounded by the curve T2 is the second range.

If the time-series data of the phase difference is included in the first range concerning the wireless tag attached to the commodity placed on the conveying belt 9 by the customer, the determining unit 606 determines that the time-series data satisfies the first condition and the wireless tag is conveyed by the conveying unit 2A. If the time-series data of the phase difference is not included in the first range but is included in the second range concerning a certain wireless tag, the determining unit 606 determines that the time-series data satisfies the second condition. The determining unit 606 controls the touch panel 81 to output information concerning the commodity attached with the wireless tag. The touch panel 81 displays the information and a message that inquires the customer whether the customer intends to purchase the commodity. The first condition and the second condition are not limited to the above, and can be set as appropriate based on an ambient environment of the wireless tag reading device 2. For example, the determining unit 606 may determine that the commodity is conveyed by the conveying unit 2A if 80% or more of the time-series data is included in the first range.

The wireless tag reading device 2 may receive a response wave from a wireless tag other than the wireless tag attached to the commodity conveyed by the conveying unit 2A. Concerning such a wireless tag, since the time-series data of the phase difference is not included in the first range and the second range, the wireless tag reading device 2 determines that the commodity is not conveyed by the conveying unit 2A. For example, if a response wave is received from a wireless tag attached to a commodity placed near the conveying unit 2A, since this commodity is not being conveyed by the conveyance mechanism, it does not move, thus the phase difference is a fixed value once a detection error is excluded.

If the same wireless tag reading devices are provided adjacent to the wireless tag reading device 2, the wireless tag reading device 2 may receive a response wave from a wireless tag conveyed by the adjacent wireless tag reading device. In such a case as this, the reading target wireless tag and the non-reading target wireless tag would be conveyed at approximately the same speed. However, since the distance between the antenna 16 and the non-reading target wireless tag is larger, time-series data of a phase difference concerning the non-reading target wireless tag will not be approximated by the curve T in FIG. 9. Therefore, even in such a case, the wireless tag reading device 2 can distinguish the reading target wireless tag from the other wireless tags.

If a plurality of wireless tag reading devices 2 are provided adjacent to one another, the shapes and the positions of the metal plates 17 of the wireless tag reading devices 2 can be varied from device to device. Consequently, it is possible to more surely distinguish the reading target wireless tag conveyed by a particular wireless tag reading device 2 from a wireless tag conveyed by another wireless tag reading device 2. It is also possible to provide a plurality of antennas 16.

If a plurality of antennas 16 are provided, accuracy for distinguishing the reading target wireless tag from the other wireless tags can be further improved. If a plurality of antennas 16 are provided, it is desirable to provide the plurality of antennas 16 arranged along the conveying direction. If the distances between the antennas 16 and the metal plate 17 are differentiated, the time-series data curves T of the respective antennas 16 are not approximate to each other and are distinguishable from one another. Therefore, the accuracy can be improved.

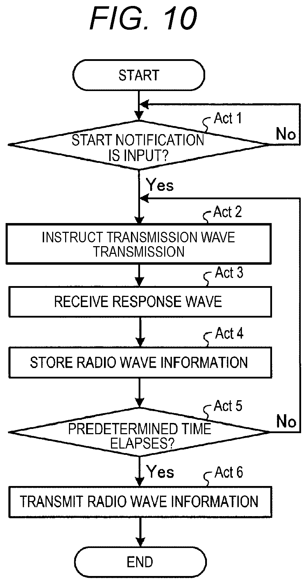

Processing concerning radio wave information, which is performed by the control unit 20 of the wireless tag reading device 2, is explained with reference to the flowchart of FIG. 10. The control unit 20 determines whether the start point sensors 11 detect a commodity, and a start notification is input to the first sensor input unit 201 (Act 1). If the start notification is input to the first sensor input unit 201, the radio-wave control unit 203 outputs a transmission wave transmission instruction so that the antenna 16 transmits a transmission wave (Act 2) . If the start notification is not input to the first sensor input unit 201, the control unit 20 returns to Act 1.

Subsequently, when the antenna receives a response wave (Act 3), the radio-wave-information processing unit 204 stores radio wave information (Act 4). Thereafter, the control unit 20 determines whether a predetermined time has elapsed after the start notification was input (Act 5) . If the predetermined time has elapsed, the radio-wave-information output unit 205 controls the communication interface 50 to transmit the radio wave information stored so far to the checkout device 3 (Act 6) . If determining in Act 5 that the predetermined time has not elapsed, the control unit 20 returns to Act 2 and repeats the subsequent processing. The predetermined time is a time in which a commodity is conveyed in the section X. The predetermined time is determined depending on the conveying speed of the conveying unit 2A. For example, the predetermined time is 14 seconds as illustrated in FIG. 9.

The antenna 16 may receive response waves from wireless tags other than the wireless tag attached to the commodity conveyed by the conveying unit 2A. In such a case, the processing in Act 2 to Act 4 and Act 6 is performed in parallel for each of the wireless tags. The processing illustrated in FIG. 10 is performed every time the commodity passes the start point sensors 11. If a plurality of commodities are located in the section X, the processing is performed in parallel. Therefore, the radio-wave-information output unit 205 can control the communication interface 50 to transmit radio wave information for each of the wireless tags to the checkout device 3.

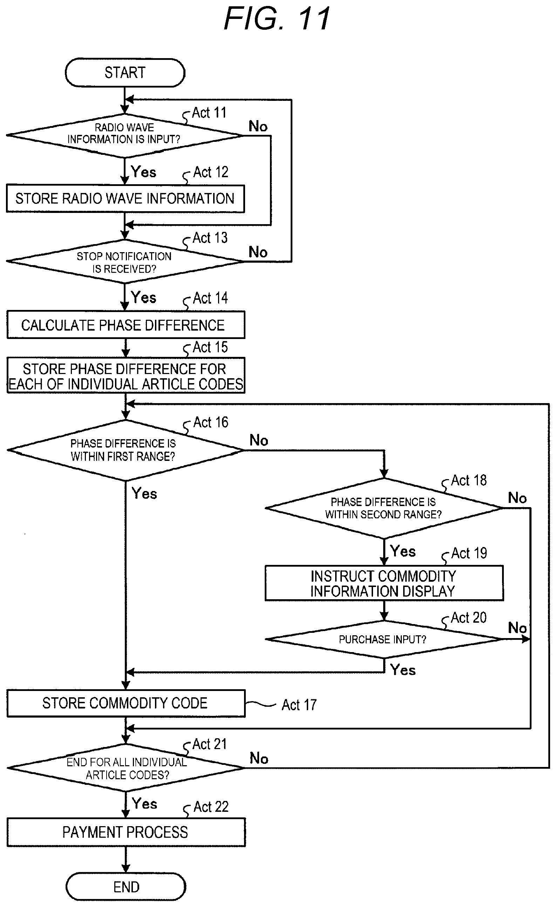

Processing performed by the control unit 60 of the checkout device 3 is explained with reference to the flowchart of FIG. 11. The control unit 60 determines whether the radio-wave-information acquiring unit 601 acquires radio wave information from the wireless tag reading device 2 (Act 11). If the radio wave information is acquired, the radio-wave-information acquiring unit 601 stores the received radio wave information (Act 12). If the radio-wave-information acquiring unit 601 does not acquire the radio wave information, the control unit 60 skips Act 12.

Thereafter, the control unit 60 determines whether a stop notification is input from the wireless tag reading device 2 to the second sensor input unit 602 (Act 13) . If the end point sensors 12 of the conveying unit 2A has not detected any commodity for a set time, the wireless tag reading device 2 determines that all purchase target commodities of the customer have been conveyed by the conveying unit 2A, and inputs the stop notification to the second sensor input unit 602. If the stop notification is input to the second sensor input unit 602, the phase-difference calculating unit 604 calculates, based on phase information of transmission waves and response waves to the transmission waves in the stored radio wave information, for each of the transmission waves, a phase difference between the transmission wave and the response wave (Act 14). Subsequently, the time-series data acquiring unit 605 stores, referring to individual article codes included in the radio wave information, for each of the individual article codes, the phase difference calculated in Act 14 (Act 15) . That is, the time-series data acquiring unit 605 acquires, for each of the individual article codes, time-series data of a phase difference corresponding to FIG. 9.

Subsequently, the determining unit 606 determines whether the time-series data of the phase difference for each of the individual article codes is within the first range (Act 16). If the time-series data is within the first range, the determining unit 606 determines that the time-series data satisfies the first condition, and stores a commodity code concerning a commodity specified by the individual article code (Act 17). If determining in Act 16 that the time-series data of the phase difference is not within the first range, the determining unit 606 determines whether the time-series data of the phase difference is within the second range (Act 18). If the time-series data of the phase difference is within the second range, the determining unit 606 determines that the time-series data satisfies the second condition, and controls the touch panel 81 to output a display instruction for information concerning a commodity specified by the individual article code (Act 19). The touch panel 81 shows a message that urges the customer to input whether the customer intends to purchase the commodity. If the determining unit 606 determines in Act 18 that the time-series data of the phase difference is not within the second range, the control unit 60 skips Act 17.

Subsequently, the determining unit 606 determines whether a purchase input is received by the touch panel 81 (Act 20). If determining in Act 20 that the purchase input is received, the determining unit 606 proceeds to Act 17 determining that the target commodity is conveyed by the conveying unit 2A, and stores the commodity code. If the determining unit 606 determines in Act 20 that the purchase input is not received, the control unit 60 skips Act 17. Thereafter, the control unit 60 determines, concerning stored time-series data of phase differences of all the individual article codes, whether the determination by the determining unit 606 has ended (Act 21). If the determination by the determining unit 606 has ended, the payment process unit 607 performs the payment process concerning the commodity having the commodity code stored in Act 17 (Act 22), and the processing ends. If determining in Act 21 that the determination by the determining unit 606 has not ended concerning the time-series data of the phase difference of all the individual article codes, the control unit 60 returns to Act 16. The payment process is performed concerning the commodity conveyed by the conveying unit 2A according to the processing explained above.

As explained above, the wireless tag reading device 2 includes the metal plate 17 that is provided along the conveying path 9A and reflects a transmission wave transmitted from the antenna 16. Additionally, the wireless tag reading device 2 includes the radio-wave information output unit 205 that outputs radio wave information relating to a phase difference between the transmission wave and a response wave. Accordingly, characteristic time-series data of a phase difference can be acquired for a wireless tag moving on the conveying path 9A. Therefore, the checkout device 3 is capable of surely determining whether the conveyed wireless tag is a wireless tag attached to a commodity conveyed by the conveying path 9A.

In the wireless tag reading device 2, since the metal plate 17 is provided close to one side from the center in the conveying direction of the conveying path 9A, the influence on the response wave by the metal plate 17 can be suppressed on the other side where the metal plate 17 is not located. Therefore, the wireless tag reading device can surely read tag information of a wireless tag on the other side.

If time-series data of a phase difference acquired by the time-series data acquiring unit 605 satisfies the first predetermined condition, the checkout device 3 processes tag information of a wireless tag relating to the time-series data. That is, if a difference between the time-series data and reference data is equal to or smaller than 20%, the checkout device 3 determines that a commodity attached with the wireless tag relating to the time-series data is conveyed by the conveying unit 2A, and performs a payment process. The checkout device 3 does not perform the payment process for wireless tags other than the wireless tag. Therefore, the checkout device 3 can distinguish a target wireless tag conveyed by the conveying unit 2A from non-target wireless tags other than the reading target wireless tag, and perform the payment process. Accordingly, it is possible to avoid performing a wrong payment process for commodities that a customer did not intend to purchase. Moreover, since the wireless tag reading device 2 uses a radio wave for reading commodity information from the wireless tag, it is possible to simplify a configuration for determining that the wireless tag is being (or has been) conveyed by the conveying unit 2A.

If time-series data of a phase difference acquired by the time-series data acquiring unit 605 satisfies the second predetermined condition, the checkout device 3 outputs tag information of a wireless tag relating to the time series data. That is, if the time-series data satisfies the second condition, the checkout device 3 displays, on the touch panel 81, commodity information of a commodity attached with the wireless tag relating to the time-series data, and asks the customer to input whether the customer intends to purchase the identified commodity corresponding to the wireless tag having time series data satisfying only the second condition. Therefore, if the determination about whether the wireless tag was conveyed by the conveying unit 2A is doubtful, it is possible ask the customer whether the commodity was conveyed by the conveying unit 2A. Accordingly, it is possible to further avoid performing a wrong payment process.

In the embodiments described above, the tag information processing device is explained as the checkout device 3. However, the tag information processing device can also be applied to, for example, a component managing device that conveys, with a conveying unit, any component attached to a wireless tag that identifies the component. In such a case, similarly, it is possible to distinguish the component being conveyed by the conveying unit from other components not conveyed by the conveying unit.

In the embodiments described above, the tag information processing device includes the first condition for determining whether a commodity is conveyed by the conveying unit 2A and the second condition for displaying commodity information in order to confirm whether the customer intends to purchase the commodity. However, the tag information processing device in some examples may include just one of the first condition and the second condition. Further, in the embodiments described above, the phase-difference calculating unit 604 of the checkout device 3 calculates a phase difference. However, the wireless tag reading device 2 may calculate a phase difference and the time-series data acquiring unit 605 may acquire the phase difference.

While certain embodiments have been described, these embodiments have been presented by way of example only and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims and their equivalents are intended to cover such forms or modifications as would fall within the scope of the inventions.

## Claims

1. A wireless tag reading checkout apparatus, comprising:
a conveyor configured to convey objects with wireless tags attached thereto;
an antenna arranged along a portion of the conveyor configured to transmit an interrogation wave for reading wireless tags and receive a response wave from the wireless tags; and
a controller configured to:
calculate changes in a phase difference between the interrogation wave and a response wave from a wireless tag over a time corresponding to the conveyance of an object by the conveyor, and
identify whether the wireless tag responding to the interrogation wave is on the object conveyed by the conveyor using the calculated changes in the phase difference.

2. The wireless tag reading checkout apparatus according to claim 1, wherein the antenna is under the conveyor, and a radio wave reflector is under the antenna so as to partially cover a lower surface of the antenna.

3. The wireless tag reading checkout apparatus according to claim 2, wherein the antenna is located immediately under a center of a particular section of the conveyor, and the radio wave reflector is arranged closer to a downstream end of the particular section than the antenna.

4. The wireless tag reading checkout apparatus according to any of claims 1 to 3, further comprising:
a memory that stores reference data that indicates changes in phase difference between interrogation wave and a response wave from a wireless tag during a conveyance of the wireless tag by the conveyor, wherein
whether or not the wireless tag responding to the interrogation wave is identified as being on the object is based on a comparison of the calculated changes in phase difference to the reference data.

5. The wireless tag reading checkout apparatus according to claim 4, wherein the controller is further configured to:
compare the reference data to the calculated changes in phase difference, and
determine that a wireless tag, which has transmitted the response wave, has been conveyed by the conveyor when deviation of the calculated changes in phase difference from the reference data falls within a first predetermined range.

6. The wireless tag reading checkout apparatus according to claim 5, wherein the controller is further configured to generate a request for a user confirmation of inclusion of the object in a sales transaction when the deviation does not fall within the first predetermined range but falls within a second predetermined range wider than the first predetermined range.

7. The wireless tag reading checkout apparatus according to claim 6, further comprising:
a display, wherein
the controller is further configured to generate a screen for displaying the request on the display.

8. The wireless tag reading checkout apparatus according to claim 6 or 7, wherein the controller is further configured to determine that a wireless tag is on an object that has not been conveyed by the conveyor when the deviation does not fall within the second predetermined range.

9. The wireless tag reading checkout apparatus according to any of claims 1 to 8, wherein the controller is further configured to perform checkout processing based on information stored in wireless tags determined as having been conveyed by the conveyor.

10. The wireless tag reading checkout apparatus according to any of claims 1 to 9, further comprising:
first and second sensors each configured to detect an object being conveyed by the conveyor, wherein
the controller is further configured to start the transmission of the interrogation wave when the object is detected by the first sensor and to stop the transmission of the interrogation wave when the obj ect is detected by the second sensor.

11. A wireless tag reading method, comprising:
conveying an object along a conveyor, the object having a wireless tag attached thereto;
transmitting an interrogation wave from an antenna during the conveyance of the object;
calculating changes in a phase difference between the interrogation wave and a response wave received by the antenna from a wireless tag; and
identifying whether the wireless tag responding to the interrogation wave is on the object conveyed by the conveyor using the calculated changes in the phase difference.

12. The method according to claim 11, wherein the antenna is under the conveyor, and a radio wave reflector is under the antenna so as to partially cover a lower surface of the antenna.

13. The method according to claim 12, wherein the antenna is located immediately under a center of a particular section of the conveyor, and the radio wave reflector is arranged closer to a downstream end of the particular section than the antenna.

14. The method according to any of claims 11 to 13, further comprising:
storing reference data that indicates changes in phase difference between the interrogation wave = and a response wave from a wireless tag during a conveyance of the wireless tag by the conveyor, wherein
whether or not the wireless tag responding to the interrogation wave is identified as being on the obj ect is based on a comparison of the calculated changes in phase difference to the reference data, the method preferably further comprising:
comparing the reference data to the calculated changes in phase difference; and
determining that a wireless tag, which has transmitted the response wave, has been conveyed by the conveyor when deviation of the calculated changes in phase difference from the reference data falls within a first predetermined range, the method further preferably comprising:
generating a request for a user confirmation of inclusion of the object in a sales transaction when the deviation does not fall within the first predetermined range but falls within a second predetermined range wider than the first predetermined range.

15. A checkout system, comprising:
a conveyor configured to convey a commodity with a wireless tag attached thereto;
an antenna arranged along the conveyor;
a controller configured to control the antenna to transmit interrogation waves during the conveyance of the commodity; and
a checkout device configured to:
calculate changes in phase difference between the interrogation waves transmitted by the antenna and response waves received by the antenna in response to the interrogation waves,
identify whether or not a wireless tag that has transmitted a response wave is on a commodity that has been conveyed by the conveyor based on the calculated changes in the phase difference, and
perform checkout processing based on information stored in the wireless tag of the object that has been identified as having been conveyed by the conveyor.
